# EUROPEAN PATENT SPECIFICATION

(11) **EP 3 345 757 B1**
(45) Date of publication and mention of the grant of the patent: **19.05.2021**
(21) Application number: 18150940.7
(22) Date of filing: 10.01.2018
(51) Int. Cl.: B32B 27/12, E04D 12/00

(54) **ADVANCED MULTILAYER BREATHABLE ROOFING LAMINATE**
VERBESSERTES MEHRSCHICHTIGES ATMUNGSAKTIVES BEDACHUNGSLAMINAT
STRATIFIÉ DE TOITURE RESPIRANT, MULTICOUCHE, AVANCÉ

(30) Priority: 10.01.2017 GR 20170100006
(43) Date of publication of application: 11.07.2018
(73) Proprietor: Thrace Nonwovens & Geosynthetics S.A., 67100 Magiko Xanthis (GR)
(72) Inventor: KARAGEORGIOU, Christos, 67100 Xanthi (GR); KLAUSEN, Thomas, 31224 Peine (DE); PEIFER, Martin, D-66851 Queidersbach (DE); GEORGIADIS, George, 67100 Xanthi (GR)
(74) Representative: Samuelides, Emmanuel

(56) References cited:
- WO-A1-2005/030860
- WO-A1-2006/080907
- US-A1- 2015 354 205
- US-A1- 2016 046 096
- US-B1- 6 541 072

## Description

The invention relates to breathable laminates or breathable underlays used in building construction.

Known breathable underlays are laminates that are usually used in building construction and include a carrier layer and an active layer. The carrier layer is water-permeable and vapour-permeable and the active layer is water-impermeable and vapour-permeable. Either one or each one of both faces of the active layer is bonded with a carrier layer. According to DIN 4108-3, layers are qualified as breathable if they have a water vapour diffusion equivalent air layer thickness S_{d} equal to or less than 0.5 m.

Document EP-0708212 A1 discloses a breathable laminate with the active or barrier layer being bonded between two carrier layers. The barrier layer is made of TPE-U (hydrophilic thermoplastic polyurethane), TPE-A (hydrophilic polyether polyamide block copolymer) or TPE-E (hydrophilic polyetherester). The thickness of the barrier layer is claimed to be in the range of 10 - 100 µm (1 µm = micron =10⁻⁶ m). The carrier layer includes polyethylene fibers or polyester fibers or polypropylene fibers.

A known sandwich laminate has two water- and vapour-permeable carrier layers and a vapour-permeable and watertight active layer. The active layer is a film with a thickness of 20 µm - 100 µm and it is applied in the middle, between the two carrier layers. The active layer can be made of PP (polypropylene) or PE (polyethylene) homopolymer with inorganic filler, preferably calcium carbonate filler. The weight of the active layer is in the range 20 g/m² - 60 g/m² (g/m²: grams per square meter) and the inorganic filler is 20 % - 60 % of the weight of the active layer. Each carrier layer has a thickness of 200 µm to 600 µm and weight of 20 g/m² - 200 g/m² and offers strength and flexibility to the sandwich laminate. Carrier layers, which are applied on both sides of the barrier layer, offer relatively higher mechanical strength to the breathable laminate.

Document EP-2256266-A1 presents an underlay with a waterproof, water-vapour-permeable sealing layer, which is arranged on a support layer. The sealing layer is made of aromatic thermoplastic polyurethane, i.e. aromatic TPU. The thickness of the sealing layer is at least 0.1 mm and its weight is at least 100 grams per square meters (g/m²). A connecting strip made of the same material as the sealing layer is provided along an edge of the support layer and projects over the edge of the support layer.

Document EP-2592196-A1 presents an underlay with a water- and water-vapour-permeable carrier layer and a waterproof and water-vapour-permeable sealing layer made of thermoplastic polyurethane, i.e. TPU. The carrier layer comprises a fibrous material with a weight in the range of 80 g/m² - 200 g/m² and has no capillary ascension with respect to water. The capillarity of the carrier layer is assessed according to a test that is presented in the document EP-2592196-A1**.**

One issue that is of concern in relation to the use of underlays is the ageing effect on the properties of the underlay. Known underlays are provided with additives to protect them against Ultra-Violet radiation, which results in reducing the effectiveness of an underlay with time.

US 2016046096 presents a multi-layered thermal insulation structure, which is air impermeable, liquid water impermeable and water vapour permeable. The multi-layer comprises one layer facing the inside of a building and another layer facing the outside of the building. These outer layers are air and liquid water impermeable and water vapour permeable. Between the outer layers there are alternating layers of air and water vapour permeable, fibrous or filamentous or other polymeric, insulating layers incorporating UV and heat stabilisation additives, and water vapour permeable, air impermeable film layers.

US 2015354205 presents humidity-variable directional vapor barriers to be used for the sealing of buildings.

WO200503086 discloses laminate structures, which may be used as weather-resistive barriers or sheathing membranes, interior wall vapor retarder, facers for a polymer foam, roofing underlayment and concrete underlayment. These laminate structures have a substrate comprising a woven or non-woven fabric with a non-polar olefin polymer and a film of a polymer blend that comprises a polyolefin, a block copolyamide having polymerized therein hydrophilic blocks, particularly those based on polyethylene glycol, and an effective amount of a compatibilizing polymer that contains an unsaturated carboxylic acid moiety, especially an acrylic acid or methacrylic acid moiety. The film-forming polymer compositions may also include one or more conventional additives including UV stabilizers.

US2004058603 presents a laminated tarpouline for trucks with a UV and weather resistance, i.e. against heavy rain, active layer made of a blend of vinyl and PVC polymers and/or copolymers and a very thin layer of thermoplastic polyurethane that facilitates adhesion between overlappping tarp sections during welding/joining. The active layer is applied to a first side of a textile and at least partially invades the voids between the fabrics.

The object of the invention is a breathable underlay for roofs and façades that has long life time and resistance to the loading of the environment.

The invention is defined in the independent claim. Dependent claims define additional features which offer further advantages to the invention.

A breathable underlay or laminate according to the invention comprises at least one fabric carrier layer with two faces, which carrier layer is water-permeable and vapour-permeable, and a water-impermeable and vapour-permeable active layer attached to one face of the two faces of the carrier layer. The carrier layer is coated on the other face of the two faces with a coating layer, which coating layer has a face that is exposed and which is water-permeable and vapour-permeable and it is made at least partially from one of the following a) thermoplastic polyurethane, b) polyether polyamide block copolymer or c) polyether-ester

Preferably the coating layer is made of aromatic or non-aromatic thermoplastic polyurethane, abbreviated: TPU. Water and vapour permeability are defined in accordance with EN 13859-1 and 13859-2. Water vapour transmission was also defined by EN ISO 12572: 2001, "Hygrothermal performance of building materials and products - Determination of water vapour transmission properties".

An underlay according to the invention combines excellent mechanical properties and water tightness and high vapour permeability and UV resistance. The advanced multilayer laminate according to the invention poses excellent properties to be used as an element for the insulation for roofs. An underlay according to the invention with a coating of thermoplastic polymer as in claim 1 and an active breathable layer retains the breathability and serviceability of an uncoated underlay for relatively longer time periods.

Optionally the thickness of the water-permeable and vapour-permeable coating layer is between 50 µm and 70 µm. In one embodiment the thickness is in the range of 10 µm to 40 µm, preferably about 35 µm. The weight of the coating layer is in the range of 5 g/m² to 200 g/m², optionally less than 60 g/m². In one embodiment the thickness is about 45 g/m².

The active layer may be at least partially of polypropylene or polyethylene homopolymer and includes an inorganic filler, for example calciumcarbonate. The weight of the inorganic filler may be is in the range of 20 % - 60 % of the weight of the active layer. Alternatively, the active layer is monolithic. A monolithic layer may be of polyamide PA6, PA6,6, TPEE or TPU. A reinforcing polymer net may be inserted between the active layer and a carrier layer to provide strength to the underlay.

An embodiment of the invention is a sandwich underlay or laminate and comprises two water- permeable and vapour-permeable carrier layers and an active layer between the two carrier layers. In such an embodiment either the one or both carrier layers are laminated with a coating layer. In a sandwich layer the thickness of the two carrier layers may differ.

Joining adjacent laminates may be done with standard procedures, such as double sided adhesive tape, butyl or any other suitable glue, adhesive applied via spray application, slot die, kiss roller application or other mechanical adhesions, such as nailing, stapling.

Preferred embodiments of the invention are described with reference to **Figures 1 to 4****:**
**Figure 1** shows an example of a breathable underlay with a coating layer.
**Figure 2** shows an example of a breathable sandwich underlay with coating layers on both sides.
**Figure 3** shows an example of a breathable sandwich underlay with a coating layer on one side.
**Figure 4** shows the surface of the carrier layer before applying the coating layer.

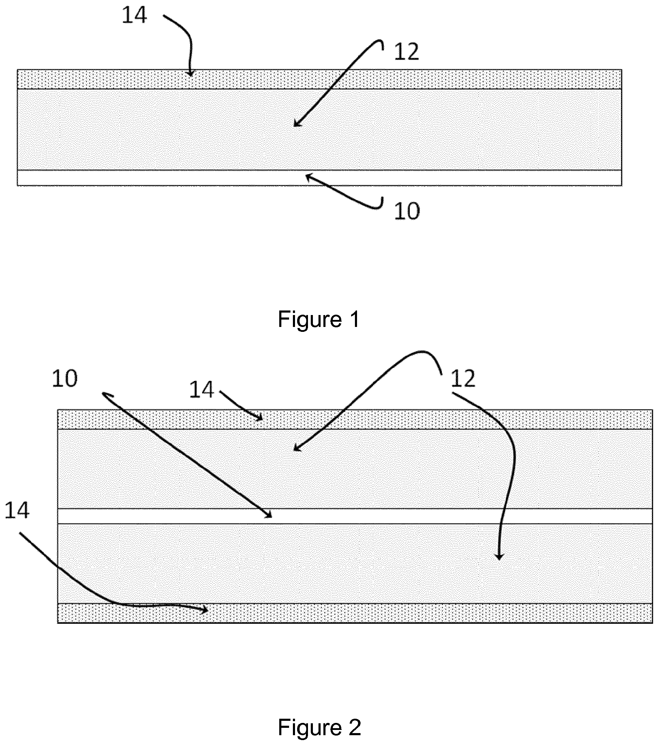

**Figure 1** shows an embodiment of the invention. The underlay shown in
**Figure 1** has a water- and vapour-permeable carrier layer **12** and a vapour-permeable and watertight active layer **10.** The underlay has a water vapour diffusion equivalent air layer thickness S_{d} equal to or less than 0.5m. The carrier layer **12** has two faces, a first face on one side of the carrier layer **12,** which is in contact with the active layer **10,** and a second face that is on the other side of the carrier layer **12.** A water- and vapour-permeable cover thermoplastic polyurethane, i.e. TPU, layer **14** is applied on the face of the carrier layer **12,** which face is not in contact with the active layer **10.**

In a further embodiment of the invention shown in **Figure 2****,** the underlay is a sandwich laminate with two water- and vapour-permeable carrier layers **12** and a vapour-permeable and watertight active layer **10** arranged between the two carrier layers **12.** In one version of this embodiment the one carrier layer **12** is thicker than the other carrier layer **12.** In use the thicker carrier layer **12** faces outwards, i.e. it is on the top when the underlay is placed on a roof, and the thinner carrier layer **12** is placed in contact with the building elements and protects the active layer **10** from contact, for example from friction.

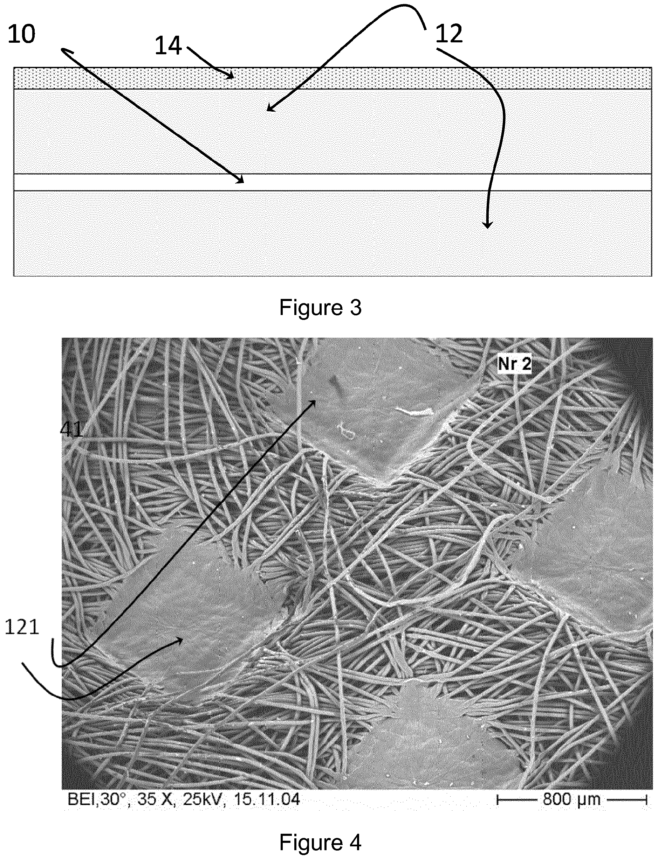

In the case of a sandwich laminate, a water- and vapour- permeable coating thermoplastic polyurethane, abbreviated: TPU, layer **14** is applied on the face of each carrier layer **12,** which face is not in contact with the active layer **10.** Alternatively, the TPU coating layer **14** may be applied only on one of the two carrier layers **12** as shown in **Figure 3****,** which in use will be on the top, i.e. facing outwards. When both carrier layers **12** are coated with a TPU coating water permeable layer **14,** as shown for example in **Figure 2****,** the adhesion of two adjacent underlays is facilitated as the TPU coating of one laminate adheres to the TPU coating of the other laminate. In both embodiments of Figure 1 and Figure 2 the face of the coating layer **14** that is not in contact with the carrier layer **10** is uncovered and exposed to the environment.

In the embodiments of **Figures 1 to 3****,** the face of the coating layers **14** that are not in contact with the carrier layer **12** are free, i.e. exposed to the environment.

Breathability of a layer may be achieved through micro-porous material or using monolithic layer. A monolithic layer may be made of polyamide PA6, PA6,6, TPEE or TPU. The active layer **10** may be monolithic. Alternatively, the active layer **10** may be of polypropylene, abbreviated: PP, or polyethylene, abbreviated: PE, homopolymer with inorganic filler, preferably calcium carbonate and has a thickness of in the range of 15 µm - 100 µm. The weight of the active layer **10** is in the range 10 g/m² - 70 g/m² and the inorganic filler is 20 % - 60 % of the weight of the active layer. The active layer **10** provides a water barrier but vapour-permeability and offers high resistance against temperature up to 140 °C. Compared to PP, an active layer made of PE homo polymer shows a significant higher UV resistance but a lower temperature resistance, i.e. it may resist temperatures up to 90 °C underneath the roof. The active layer **10** has a low resistance to vapour permeability, with a diffusion resistivity, S_{d} value, which may be equal to 0.01 meters equivalent air thickness. Active layers, which are watertight and vapour permeable, are not limited to films of PP or PE but they may also include other materials and configurations that provide water-tightness and appropriate vapour diffusion resistivity, such as thermoplastic polyurethane, polyether polyamide block copolymer or polyether-ester. Active layers may be reinforced by inserting a net, for example a net made of polypropylene, polyethylene or polyamide, which increases particular their tensile strength. Such a net may be inserted between the active and a carrier layer.

The material of the carrier layer **12** is a nonwoven fabric, for example a spunbond made of PP (polypropylene), PE (polyethylene), PET (polyethylene terephthalate), PET/PP or PET/PE. The nonwoven fabric may be also produced by thermo-bonding or by needle punch or hydro entanglement. The carrier layer **12** or carrier layers **12** provide the strength of the laminate. The weight of the spunbond is usually between 12 g/m² to 300 g/m² and its thickness is in the range of 30 µm to 1200 µm.

As shown in **Figures 1 to 3****,** the carrier layer **12** carries on one of its faces, i.e. the face that is not in contact with the active layer **10,** a TPU coating layer **14.** The TPU coating layer **14** is water- and vapour-permeable, thus non-watertight, and may be up to 400 µm thick. Water- and vapour-permeability of the TPU coating layer **14** may be achieved during production. In one example the spunbond is light thermobonded so that loose fibers appear on the spunbond surface. Such a thermobonding is shown in **Figure 4****,** where bonding spots are designated with **121.** With such a treatment, when the TPU is applied on the spunbond layer, channels are created between the carrier layer and the TPU layer, which allow the penetration and flow of water between the two layers. It was observed that the channels are formed, because single fibers of the spundbond stick and penetrate the TPU layer. The TPU layer is resistant against UV radiation, i.e. radiation with a wave length in the range of 280 nm - 340 nm and is relatively more resistant against chemicals like oils, wood preservatives and gasoline. TPU coating layers could be micro-perforated, if they are thick, for example 400 µm.

The active layer **10** provides the laminate with water impermeability and high vapour diffusion , the carrier layer **12** or carrier layers **14** provide the strength and the TPU coating layer **14** provides resistance against mechanical and chemical actions and UV radiation. As an alternative to thermoplastic polyurethane the water-permeable and vapour-permeable coating layer **14** may be made from polyether polyamide block copolymer or polyether-ester.

The resistance to water penetration, or water tightness of an embodiment of the invention with a sandwich laminate having one of the two carrier layers **12** coated with 45 g/m² layer of TPU **14,** was determined based on Method A of EN 1928: 2000, "Flexible sheets for waterproofing - Bitumen, plastic and rubber sheets for roof waterproofing - Determination of watertightness" as modified by Clause 5.2.3 of EN 13859-1: 2014. Three specimens were tested and were found to be watertight.

When a stand-alone carrier layer **12** was coated from one side with a 45 g/m² TPU coating layer **14,** this structure, i.e. the carrier layer **12** with the TPU coating layer **14,** was found to be water-permeable and it was classified as W2 according to standard EN13859-1: 2014.

Five specimens of a three layer underlay according to the invention with a weight of 245 g/m^2 and a thickness of 0.75 mm were tested before and after subjected to accelerated ageing. The thickness of the TPU layer is approximately 60 µm. Accelerated ageing was achieved following EN 1297: 2004 and EN 1296: 2001 as modified by EN 13859-1: 2014, Annex C. The five specimens were firstly exposed to UVA340 at 50°C for 336 hours, after which they were heated in a ventilated oven at 100 °C for 90 days.

Before ageing, the water vapour diffusion equivalent air layer thickness S_{d} of the five specimens according to EN ISO 12572 Set C was between 0.136 m and 0.211 m and the average and standard deviation were found equal to 0.172 m and 0.028 m when one face was exposed to high humidity and between 0.120 m and 0.185 m and the average and standard deviation were found equal to 0.156 m and 0.023 m when the other face was exposed to high humidity.

The tensile properties after and before accelerated ageing was determined in accordance to Annex C of EN 12311-1 as modified by Annex A of EN 13859-1: 2014. The results are presented in the Table that follows:

| Tensile property | Range measured - 5 specimens | Average value | Standard deviation |
|---|---|---|---|
| BEFORE AGEING | | | |
| MD Tensile Strength (N/50mm) | 450 - 560 | 567 | 26 |
| MD Elongation at Break (%) | 63 - 68 | 64 | 1.8 |
| XD Tensile Strength (N/50mm) | 251 - 265 | 260 | 5 |
| XD Elongation at Break | 80 - 83 | 81 | 1.0 |

| AFTER AGEING | | | |
|---|---|---|---|
| MD Tensile Strength (N/50mm) | 403 - 415 | 410 | 6 |
| MD Elongation at Break (%) | 41 - 45 | 43 | 1.7 |
| XD Tensile Strength (N/50mm) | 234 - 249 | 240 | 6 |
| XD Elongation at Break | 50 - 55 | 53 | 1.8 |

The tensile strength is given in force units, Newton, per 50 mm width.

From the above results, it is concluded that after the artificial ageing the five specimens exhibited a reduction of the tensile strength by 4% to 9% and of the elongation at break of approximately 50% in two orthogonal directions Ageing did not affect the water tightness. The resistance to water penetration was determined according to Method A of EN 1928: 2000 as modified by EN 13859-1: 2014.

Joining adjacent laminates may be done with standard procedures, such as double sided adhesive tape, butyl glue, adhesive applied via spray application, slot die, kiss roller application or other mechanical adhesions, such as nailing, stapling.

The breathable laminate of the invention is particular advantageous for sloping roofs. A laminate is qualified as breathable according to DIN 4108-3:2014-11.

## Claims

1. Breathable underlay with a water vapour diffusion equivalent air layer thickness S_{d} according to EN ISO 12572 less or equal than 0.5 m, comprising at least one fabric carrier layer **(12)** with two faces, which carrier layer **(12)** is water-permeable and vapour-permeable, and a water-impermeable and vapour-permeable active layer **(10)** attached to one face of the two faces of the carrier layer **(12) characterized in that** the carrier layer **(12)** is coated on the other face of the two faces with a coating layer **(14),** which coating layer **(14)** has a face that is exposed and which is water-permeable and vapour-permeable and it is made at least partially from one of the following a) thermoplastic polyurethane, b) polyether polyamide block copolymer or c) polyether-ester, wherein water and vapour permeability are defined in accordance with EN 13859-1 and 13859-2.

2. Breathable underlay **according to claim 1,** whereby the coating layer **(14)** is made at least partially from aromatic or non-aromatic thermoplastic polyurethane.

3. Breathable underlay **according to claim 2,** whereby the coating layer **(14)** has a thickness that is equal or less than 70 µm.

4. Breathable underlay **according to claim 3,** whereby the coating layer **(14)** has a thickness that is equal or greater than 10 µm, preferably greater than 50 µm.

5. Breathable underlay **according to any one of claims 2 to 4,** whereby the coating layer **(14)** has a weight per square meter that is equal or greater than 5 grams per square meter and equal or less than 200 grams per square meter.

6. Breathable underlay **according to claim 5,** whereby the coating layer **(14)** has a weight per square meter that is at least 50 grams per square meter.

7. Breathable underlay **according to any one of claims 1 to 6,** whereby the active layer **(10)** is either made at least partially of polypropylene or polyethylene homopolymer and includes inorganic filler or it is a monolithic layer.

8. Breathable underlay **according to claim 7,** whereby the weight of the inorganic filler is equal or greater than 20 % of the weight of the active layer **(10)** and equal or less than 60 % of the weight of the active layer **(10)**

9. Breathable underlay **according to any one of claims 1 to 8,** with a reinforcing net between the active layer **(10)** and the carrier layer **(12),** which reinforcing net is preferably made of polypropylene, polyethylene or polyamide.

10. Breathable underlay **according to any one of claims 1 to 9,** whereby the carrier layer **(12)** is a light thermobonded nonwoven fabric and in that loose fibers of the carrier layer **(12)** penetrate the coating layer **(14).**

11. Breathable underlay **according to any one of claims 1 to 10,** comprising two vapour-permeable carrier layers **(12)** and an active layer **(10)** between the two carrier layers **(12).**

12. Breathable underlay **according to claim 11,** whereby each one of the both carrier layers **(12)** are coated with a coating layer **(14).**

13. Breathable underlay **according to claim 11,** whereby one carrier layer of the two carrier layers **(12)** is coated with a coating layer **(14)** and the other one of the two carrier layers **(12)** has a face free of coating.

14. Breathable underlay **to any one of claims 11 to 13,** whereby the one carrier layer **(12)** of the two carrier layers **(12)** is thicker than the other one of the two carrier layers **(12).**

## Patentansprüche

1. Atmungsaktive Unterlage mit einer Wasserdampfdiffusion äquivalenten Luftschichtdicke S_{d} gemäß EN ISO 12572 kleiner oder gleich 0,5 m, umfassend mindestens eine Stoffträgerschicht **(12)** mit zwei Flächen, welche Stoffträgerschicht **(12)** wasserdurchlässig und dampfdurchlässig ist, und eine wasserundurchlässige und dampfdurchlässige aktive Schicht **(10),** die an einer Fläche der zwei Flächen der Trägerschicht **(12)** befestigt ist, **dadurch gekennzeichnet, dass** die Trägerschicht **(12)** an der anderen Fläche der zwei Flächen mit einer Beschichtungsschicht **(14)** beschichtet ist, welche Beschichtungsschicht **(14)** eine Fläche aufweist, die freiliegt und die wasserdurchlässig und dampfdurchlässig ist und die mindestens teilweise aus einem der folgenden besteht, a) thermoplastischem Polyurethan, b) Polyether-Polyamid-Blockcopolymer oder c) Polyetherester, wobei Wasser- und Dampfdurchlässigkeit gemäß EN 13859-1 und 13859-2 definiert sind.

2. Atmungsaktive Unterlage **nach Anspruch 1,** wobei die Beschichtungsschicht **(14)** mindestens teilweise aus aromatischem oder nicht aromatischem thermoplastischen Polyurethan besteht.

3. Atmungsaktive Unterlage **nach Anspruch 2,** wobei die Beschichtungsschicht **(14)** eine Dicke aufweist, die gleich oder kleiner 70 µm ist.

4. Atmungsaktive Unterlage **nach Anspruch 3,** wobei die Beschichtungsschicht **(14)** eine Dicke aufweist, die gleich oder größer 10 µm, vorzugsweise größer als 50 µm ist.

5. Atmungsaktive Unterlage **nach einem der Ansprüche 2 bis 4,** wobei die Beschichtungsschicht **(14)** ein Gewicht pro Quadratmeter aufweist, das gleich oder größer 5 Gramm pro Quadratmeter oder gleich oder kleiner 200 Gramm pro Quadratmeter ist.

6. Atmungsaktive Unterlage **nach Anspruch 5,** wobei die Beschichtungsschicht **(14)** ein Gewicht pro Quadratmeter aufweist, das mindestens 50 Gramm pro Quadratmeter ist.

7. Atmungsaktive Unterlage **nach einem der Ansprüche 1 bis 6,** wobei die aktive Schicht **(10)** entweder mindestens teilweise aus Polypropylen- oder Polyethylenhomopolymer besteht und anorganisches Füllmittel beinhaltet oder eine monolithische Schicht ist.

8. Atmungsaktive Unterlage **nach Anspruch 7,** wobei das Gewicht des anorganischen Füllstoffs gleich oder größer als 20 % des Gewichts der aktiven Schicht **(10)** und gleich oder kleiner als 60 % des Gewichts der aktiven Schicht **(10)** ist.

9. Atmungsaktive Unterlage **nach einem der Ansprüche 1 bis 8** mit einem Verstärkungsnetz zwischen der aktiven Schicht **(10)** und der Trägerschicht **(12),** welches Verstärkungsnetz vorzugsweise aus Polypropylen, Polyethylen oder Polyamid besteht.

10. Atmungsaktive Unterlage **nach einem der Ansprüche 1 bis 9,** wobei die Trägerschicht **(12)** ein leichter thermogebundener Vliesstoff ist und in dem lose Fasern der Trägerschicht **(12)** die Beschichtungsschicht **(14)** durchdringen.

11. Atmungsaktive Unterlage **nach einem der Ansprüche 1 bis 10,** umfassend zwei dampfdurchlässige Trägerschichten **(12)** und eine aktive Schicht **(10)** zwischen den zwei Trägerschichten **(12).**

12. Atmungsaktive Unterlage **nach Anspruch 11,** wobei jede der zwei Trägerschichten **(12)** mit einer Beschichtungsschicht **(14)** beschichtet ist.

13. Atmungsaktive Unterlage **nach Anspruch 11,** wobei eine Trägerschicht der zwei Trägerschichten **(12)** mit einer Beschichtungsschicht **(14)** beschichtet ist und die andere der zwei Trägerschichten **(12)** eine Fläche frei von Beschichtung hat.

14. Atmungsaktive Unterlage **nach einem der Ansprüche 11 bis 13,** wobei die eine Trägerschicht **(12)** der zwei Trägerschichten **(12)** dicker als die andere der zwei Trägerschichten **(12)** ist.

## Revendications

1. Stratifié respirant ayant une épaisseur de couche d'air équivalente à la diffusion de vapeur d'eau S_{d} conforme à EN ISO 12572 inférieure ou égale à 0,5 m, comprenant au moins une couche de support tissé **(12)** à deux faces, laquelle couche de support **(12)** est perméable à l'eau et perméable à la vapeur, ainsi qu'une couche active imperméable à l'eau et perméable à la vapeur **(10)** attachée à une face des deux faces de la couche de support **(12), caractérisé en ce que** la couche de support **(12)** est recouverte sur l'autre face des deux faces d'une couche de revêtement **(14),** laquelle couche de revêtement **(14)** a une face qui est exposée et qui est perméable à l'eau et perméable à la vapeur et qui est au moins partiellement constituée d'un parmi a) un polyuréthane thermoplastique, b) un copolymère séquencé de polyéther polyamide ou c) un ester de polyéther, dans lequel la perméabilité à l'eau et la perméabilité à la vapeur sont définies conformément à EN 13859-1 et 13859-2.

2. Stratifié respirant **selon la revendication 1,** selon lequel la couche de revêtement **(14)** est au moins partiellement constituée de polyuréthane thermoplastique aromatique ou non aromatique.

3. Stratifié respirant **selon la revendication 2,** selon lequel la couche de revêtement **(14)** a une épaisseur qui est inférieure ou égale à 70 µm.

4. Stratifié respirant **selon la revendication 3,** selon lequel la couche de revêtement **(14)** a une épaisseur qui est supérieure ou égale à 10 µm, de préférence supérieure à 50 µm.

5. Stratifié respirant **selon l'une quelconque des revendications 2 à 4,** selon lequel la couche de revêtement **(14)** a un poids par mètre carré qui est supérieur ou égal à 5 grammes par mètre carré et inférieur ou égal à 200 grammes par mètre carré.

6. Stratifié respirant **selon la revendication 5,** selon lequel la couche de revêtement **(14)** a un poids par mètre carré qui est d'au moins 50 grammes par mètre carré.

7. Stratifié respirant **selon l'une quelconque des revendications 1 à 6,** selon lequel la couche active **(10)** est soit au moins partiellement constituée d'un homopolymère de polypropylène ou de polyéthylène et inclut une charge inorganique, soit une couche monolithique.

8. Stratifié respirant **selon la revendication 7,** selon lequel le poids de la charge inorganique est supérieur ou égal à 20 % du poids de la couche active **(10)** et inférieur ou égal à 60 % du poids de la couche active **(10).**

9. Stratifié respirant **selon l'une quelconque des revendications 1 à 8,** comportant un filet de renforcement entre la couche active **(10)** et la couche de support **(12),** lequel filet de renforcement est de préférence constitué de polypropylène, de polyéthylène ou de polyamide.

10. Stratifié respirant **selon l'une quelconque des revendications 1 à 9,** selon lequel la couche de support **(12)** est un tissu non tissé thermolié léger et en ce que des fibres lâches de la couche de support **(12)** pénètrent dans la couche de revêtement **(14).**

11. Stratifié respirant **selon l'une quelconque des revendications 1 à 10,** comprenant deux couches de support perméables à la vapeur **(12)** et une couche active **(10)** entre les deux couches de support **(12).**

12. Stratifié respirant **selon la revendication 11,** selon lequel chacune des deux couches de support **(12)** est recouverte d'une couche de revêtement **(14).**

13. Stratifié respirant **selon la revendication 11,** selon lequel une couche de support des deux couches de support **(12)** est recouverte d'une couche de revêtement **(14)** et l'autre des deux couches de support **(12)** a une face dépourvue de revêtement.

14. Stratifié respirant **selon l'une quelconque des revendications 11 à 13,** selon lequel la première couche de support **(12)** des deux couches de support **(12)** est plus épaisse que l'autre des deux couches de support **(12).**
